# EUROPÄISCHE PATENTSCHRIFT

(11) **EP 3 985 296 B1**
(45) Veröffentlichungstag und Bekanntmachung des Hinweises auf die Patenterteilung: **29.11.2023**
(21) Anmeldenummer: 21200629.0
(22) Anmeldetag: 04.10.2021
(51) Int. Cl.: F16L 41/08, E03F 3/04

(54) **ANSCHLUSSSYSTEM**
CONNECTION SYSTEM
SYSTÈME DE RACCORDEMENT

(30) Priorität: 14.10.2020 DE 202020105858 U
(43) Veröffentlichungstag der Anmeldung: 20.04.2022
(73) Patentinhaber: REHAU Industries SE & Co. KG, 95111 Rehau (DE)
(72) Erfinder: Sieber, Jürgen, 91074 Herzogenaurach (DE)

(56) Entgegenhaltungen:
- WO-A1-2021/078484
- DE-U1-202015 106 967
- DE-U1-202015 106 969
- FR-A1- 2 901 861

## Beschreibung

Die Erfindung betrifft ein Anschlusssystem zum Anschließen eines Rohres an ein Hauptrohr gemäß dem Oberbegriff des Anspruches 1. Weiterhin betrifft die Erfindung ein Rohrsystem, das mit einem derartigen Anschlusssystem ausgestattet ist.

Der Anschluss eines Rohres an ein Hauptrohr ist ein häufig anzutreffender Fall, wenn beispielsweise Wohngebiete erschlossen werden und Abwasserrohre aus den einzelnen Häusern oder Wohnblocks an ein Hauptrohr anzubinden sind. Hierzu sind Anschlusssysteme notwendig, die einfach zu installieren sind, die die für diesen Zweck notwendige hohe Zuverlässigkeit hinsichtlich der Dichtheit aufweisen und kostengünstig sind. Insbesondere ist eine solche nachträgliche Installation an einem Hauptrohr eine Arbeit, die unter Kostengesichtspunkten so einfach wie möglich bewerkstelligt werden soll, um den Aushub für die Baugrube zu minimieren, dennoch aber einen praktikablen - vor allem aber dauerhaften und möglichst dichten - Anschluss herzustellen.

So ist beispielsweise aus der DE 10 2008 021 470 A1 bekannt, ein Rohr mithilfe eines Anschlusssystems an ein Hauptrohr anzuschließen. Die Dichtheit wird hierbei durch einen Elastomereinsatz erreicht, der in der Queröffnung des Hauptrohres positioniert ist.

Die DE 202015106969 U1 beschreibt ein Anschlusssystem zum Anschließen eines Rohres an ein Hauptrohr, einen Schacht, oder dergleichen, an einer Queröffnung, wobei das Anschlusssystem zu diesem Zweck mit dem Hauptrohr oder dem Schacht verbindbar ist, mit einem hohlstopfenförmigen, zumindest teilweise weichen Installationseinsatz, dessen Außenseite an die Queröffnung angepasst ist, und dessen Innenseite einen konischen Schraubbereich aufweist, und einem relativ härteren Anschlussstutzen, der ein Eingriffsende, einen konischen Mittelteil mit Außengewinde und ein Antriebsende aufweist, das sich dadurch auszeichnet, dass der Installationseinsatz einem aufgeweiteten Endabschnitt mit wenigstens einer abgeknickten Lasche aufweist, der durch Zusammendrücken mit der Lasche voran durch die Queröffnung des Hauptrohres oder Schachts in dieses / diesen teilweise einschiebbar ist, und wobei eine äußere Anlagefläche des Installationseinsatzes in einem Verbindungszustand, in dem das Anschlusssystem mit dem Hauptrohr oder Schacht verbunden ist, wenigstens teilweise eine Hauptrohrinnenfläche, die an die Queröffnung angrenzt und diese umgibt, kontaktiert, und wobei am dem aufgeweiteten Endabschnitt gegenüberliegenden Endabschnitt des Installationseinsatzes wenigstens ein Fixierelement angeordnet ist.

Weiterhin ist in der FR 2901861 A1 ein Verbindungsstück zwischen der einen Mantel begrenzenden Niederdruckkammer eines Bremskraftverstärkers und der Unterdruckleitung eines Unterdruckkreises, umfassend ein Verbindungselement zur Niederdrucckammer, das an dem Mantel dieser Kammer angebracht ist und ein Verbindungselement an der Vakuumleitung, das mit einer an der Vakuumleitung montierten Pipette versehen ist, wobei diese beiden Elemente in Fluidverbindung stehen, welches sich dadurch auszeichnen soll, dass die beiden Verbindungselemente eine starre gegenseitige Anordnung umfassen Mittel und dass die Befestigungsmittel des Verbindungselements zum unteren Kammerdruck am Mantel dieser Kammer es ermöglichen, die Winkelposition zu wählen der Pipette um die Verbindungsachse dieser beiden Elemente, die um einen bestimmten Winkel um die Verbindungsachse des Verbindungselements zur Unterdruckkammer geneigt ist.

Allgemein besteht ein großes Interesse, einfachere Anschlusssysteme mit einem hohen Grad an Dichtheit zur Verfügung gestellt zu bekommen, die des Weiteren in schneller und sicherer Weise installierbar sind.

Die vorgenannte bewährte Technik stößt an ihre Grenzen, wenn ein inlinersaniertes Hauptrohr vorliegt. Bei einem inlinersanierten Hauptrohr ist ein sog. Inliner - ein Kunststoffrohr mit einer dünnen Wandstärke - im Inneren des Hauptrohres positioniert, weil dieses vorher beispielsweise durch Beschädigungen, Wurzeleinwuchs und anderes mehr undicht geworden ist. Insbesondere Rohre aus Beton oder Steinzeug oder Stahlbeton sind häufig auf Grund des Rohrmaterials von solchen Schäden betroffen. Durch die Sanierung mit einem Inliner - quasi einem Rohr im Inneren eines beschädigten Rohres - kann dieses wieder nahezu uneingeschränkt genutzt werden.

Ein Anschlusssystem zum Anschließen eines Rohres an ein solches Hauptrohr, insbesondere an ein durch einen Inliner saniertes Hauptrohr, muss daher nicht nur die Dichtheit an der Queröffnung sicherstellen, sondern auch verhindern, dass in den Spalt zwischen der Innenoberfläche des Hauptrohres und dem Inliner Flüssigkeit eindringt.

Gleiches gilt auch für Schächte, auch an diesen sind Anschlüsse nachträglich herzustellen, auch diese sind häufig mit Hilfe einer Auskleidung saniert.

Da eine Vielzahl von unterschiedlichen Hauptrohren - insbesondere solchen mit einer unterschiedlichen Dicke der Rohrwandung - verlegt sind, besteht der Bedarf darin, dass eine möglichst universelle, das heißt einen großen Rohrwanddickenbereich abdeckende Lösung in Form eines Anschlusssystems am Markt verfügbar ist.

Hier setzt die Erfindung ein, die es sich zur Aufgabe gemacht hat, ein Anschlusssystem bereitzustellen, das die o.g. Probleme aus dem Stand der Technik löst.

Die Lösung dieser Aufgabe erfolgt durch die Merkmale gemäß Anspruch 1.

Es wurde im Rahmen der vorliegenden Erfindung erkannt, dass ein Anschlusssystem zum Anschließen eines Rohres an ein Hauptrohr, einen Schacht, oder dergleichen, an einer Queröffnung, wobei das Anschlusssystem zu diesem Zweck mit dem Hauptrohr oder dem Schacht verbindbar ist, mit einem hohlstopfenförmigen, zumindest teilweise weichen Installationseinsatz, dessen Außenseite an die Queröffnung angepasst ist, und dessen Innenseite einen Rastbereich aufweist, wobei der Installationseinsatz einen aufgeweiteten Endabschnitt mit wenigstens einer abgeknickten Lasche aufweist, der durch Zusammendrücken mit der Lasche voran durch die Queröffnung des Hauptrohres oder Schachts in dieses / diesen teilweise einschiebbar ist, und wobei eine äußere Anlagefläche des Installationseinsatzes in einem Verbindungszustand, in dem das Anschlusssystem mit dem Hauptrohr oder Schacht verbunden ist, wenigstens teilweise eine Hauptrohrinnenfläche, die an die Queröffnung angrenzt und diese umgibt, kontaktiert, und einem relativ härteren Anschlussstutzen, der ein Eingriffsende, einen zylindrischen Mittelteil mit Rastvorsprüngen und ein Verbindungsende aufweist, wobei an dem dem aufgeweiteten Endabschnitt gegenüberliegenden Endabschnitt des Installationseinsatzes wenigstens ein Anlageelement und dem dem aufgeweiteten Endabschnitt gegenüberliegenden Ende der Anlagefläche des Installationseinsatzes wenigstens ein Fixierelement angeordnet ist, diese Aufgabe löst.

Erfindungsgemäß ist hierzu vorgesehen, dass das Anlageelement von Endabschnitte nach außen weg steht und in Richtung des aufgeweiteten Endabschnittes gekrümmt ist. Hierdurch kann eine besonders feste und sichere Anpressung des Anlageelements an die Oberfläche des Liners im Hauptrohr sichergestellt werden, was eine erhöhte Fluiddichtigkeit nach sich zieht.

Mithilfe dieses Anschlusssystems gelingt es, eine hohe Zuverlässigkeit hinsichtlich der Dichtheit zwischen dem angeschlossenen Rohr und dem Hauptrohr, und insbesondere einem Hauptrohr, das optional inlinersaniert ist, herzustellen.

Weiterhin ist es mit diesem Anschlusssystem gemäß vorliegender Erfindung möglich, eine möglichst universelle, das heißt einen großen Rohrwanddickenbereich abdeckende Lösung für den Anschluss eines Rohres an ein Hauptrohr oder einen Schacht oder dergleichen zur Verfügung zu stellen.

Ein derartiges erfindungsgemäßes Anschlusssystem ist gegenüber dem Stand der Technik wesentlich verbessert, was die Zuverlässigkeit hinsichtlich der Dichtheit angeht, es ist einfach herzustellen, kostengünstig bereitzustellen und ohne besonderen Aufwand zu installieren.

Im Rahmen der vorliegenden Erfindung kann es sich als vorteilhaft ergeben, wenn das Anschlusssystem derartig ausgebildet ist, dass am Endabschnitt des Installationseinsatzes eine Mehrzahl von Fixierelementen und eine Mehrzahl von Anlageelementen angeordnet ist.

Durch die Anordnung einer Mehrzahl von Fixierelementen und einer Mehrzahl von Anlageelementen gelingt es in einfacher Weise, eine ganz besonders hohe Dichtheit des Anschlusssystems der vorliegenden Erfindung zu gewährleisten.

Als besonders günstig kann sich bei der vorliegenden Erfindung ergeben, wenn vorgesehen ist, dass am Endabschnitt des Installationseinsatzes eine gleiche Anzahl von Fixierelementen und von Anlageelementen angeordnet ist, wobei die Anzahl 2, 3, 4, 5 oder 6 ist.

Durch diese Maßnahme gelingt es, ein gleichmäßiges Fixieren bzw. Anlegen des Installationseinsatzes an das Hauptrohr oder den Schacht oder dergleichen zu bewerkstelligen, was sich überaus positiv auf die mit dem erfindungsgemäßen Anschlusssystem erreichbare Dichtheit auswirkt.

Als sehr praktikabel kann sich bei der vorliegenden Erfindung ergeben, wenn vorgesehen ist, dass das Anschlusssystem derartig ausgestaltet ist, dass am Endabschnitt des Installationseinsatzes eine symmetrische Anordnung der Fixierelemente und der Anlageelemente ausgebildet ist.

Mit dieser Ausgestaltung der Erfindung kann eine besonders gleichmäßige und dichte Verbindung zwischen dem Anschlusssystem und dem Hauptrohr, dem Schacht oder dergleichen hergestellt werden.

Im Rahmen der vorliegenden Erfindung kann es sich als sehr vorteilhaft herausstellen, wenn vorgesehen ist, dass die äußere Anlagefläche des Installationseinsatzes profiliert ist und / oder wenigstens ein Dichtungselement aufweist.

Durch das Vorsehen, dass die äußere Anlagefläche des Installationseinsatzes umlaufend oder zumindest teilweise umlaufend profiliert ist und / oder wenigstens ein Dichtungselement aufweist, wird eine besonders hohe Dichtheit erreicht zwischen der Hauptrohrinnenfläche und der äußeren Anlagefläche des Installationseinsatzes.

In einer vorteilhaften Fortbildung der vorliegenden Erfindung konnte erkannt werden, dass das Anschlusssystem derart ausbildbar ist, dass der Installationseinsatz zumindest teilweise hart und zumindest teilweise weich ausgebildet ist.

Durch die zumindest teilweise harte und zumindest teilweise weiche Ausbildung des Installationseinsatzes kann dieser genau nach den herrschenden technischen Abhängigkeiten und Notwendigkeiten hinsichtlich einer einfachen Installation und einer guten und dauerhaften Gebrauchsfähigkeit konstruiert und gefertigt werden.

In einer Fortbildung der vorliegenden Erfindung kann sich als sehr günstig ergeben, wenn vorgesehen ist, dass das Anschlusssystem derartig ausgebildet ist, dass das Fixierelement band- und / oder gurtförmig ausgebildet ist.

Ein Fixierelement, das band- und / oder gurtförmig ausgebildet ist, ist besonders einfach zu nutzen, und kann in einem vergleichsweise einfachen und billigen Herstellungsverfahren hergestellt werden. Es ist darüber hinaus einfach und sicher in der Anwendung und lässt den mit der Installation des Anschlusssystems betrauten Werker leicht erkennen, ob die Vorgaben - beispielsweise hinsichtlich des herzustellenden Fixierzustandes - erreicht bzw. eingehalten sind.

Es ist bei der vorliegenden Erfindung von Vorteil, wenn vorgesehen ist, dass zwei bis sechs Fixierelemente vorhanden sind. Bevorzugt sind vier Fixierelemente vorhanden.

Es kann sich bei der vorliegenden Erfindung als sehr praktikabel erweisen, wenn ein Festlegemittel vorgesehen ist, mit dem das Fixierelement in einem fixierten Zustand festlegbar ist.

Unter "fixieren" oder "fixierter Zustand" ist im Rahmen dieser Erfindung zu verstehen, dass der Installationseinsatz, an dem wenigstens ein Fixierelement angeordnet ist, in der Queröffnung des Hauptrohres in einer definierten Anordnung positioniert ist, wobei die Lasche des Installationsbauteils an der Innenoberfläche des Hauptrohres oder des Inliners anliegt.

Ein solches Festlegemittel, das beispielsweise in Form eines Ringes bzw. Kreisringes ausgebildet sein kann, ist sehr vorteilhaft dazu einzusetzen, mit dem Fixierelement zusammenzuwirken und dieses in einem fixierten Zustand festzulegen.

Das Festlegemittel, beispielsweise in Form eines Ringes oder Kreisringes ausgebildet, kann auf die Außenoberfläche des Hauptrohres aufgelegt werden oder an der Hauptrohr-Außenoberfläche befestigt werden.

In einer sehr günstigen Ausführungsform kann das Festlegemittel eine solche Biegbarkeit aufweisen, dass es an die Außenoberfläche von Hauptrohren verschiedenen Durchmessers anlegbar oder zumindest abschnittsweise anlegbar ist.

Bei entsprechender Auslegung des Festlegemittels in Form eines Ringes oder Kreisringes, der auf die Außenoberfläche des Hauptrohres aufgelegt wird und bei entsprechender Gestaltung der Fixierelemente, die daran zur Herstellung des fixierten Zustandes festgelegt werden, kann sich der Ring oder Kreisring um die Queröffnung im Hauptrohr zentrieren. Dies ist vorteilhaft nutzbar für eine einfache Installation des Anschlusssystems am Hauptrohr.

In vorteilhafter Weise kann das Festlegemittel auch als Distanzstück verwendet werden, wenn vorgesehen ist, dass mehrere Festlegemittel in radialer Richtung an der Außenoberfläche des Hauptrohres in einer stabilen Anordnung aufeinander gelegt werden. Dies kann beispielsweise dadurch erreicht werden, dass die Haken eines Festlegemittels in entsprechende kongruente Auskehlungen eines weiteren Festlegemittels bei einer solchen Anordnung zu liegen kommen.

Es kann weiter beispielsweise vorgesehen sein, dass Festlegeelemente mit unterschiedlicher Dicke herangezogen werden, um bei unterschiedlichen Rohrdurchmessern und Rohrwanddicken das Fixierelement in einfacher Weise mit dem Festlegemittel zu verbinden.

Hierzu können beispielsweise Festlegeelemente mit Dicken von 5 und 10 mm ausgebildet sein, so dass ohne weiteres Distanzen von 5 mm, 10 mm, 15 mm, etc. durch Kombination der Vorgenannten überbrückbar sind.

Das erfindungsgemäße Anschlusssystem kann sehr vorteilhaft weitergebildet werden, wenn vorgesehen ist, dass das Fixierelement einteilig mit dem Installationseinsatz ausgebildet ist, oder dass das Fixierelement und der Installationseinsatz zweiteilig vorliegen, wobei das Fixierelement mit dem Installationseinsatz verbunden ist.

Wenn das Fixierelement und der Installationseinsatz einteilig ausgebildet sind, kann dazu ein relativ einfacher Herstellvorgang genutzt werden. Weiterhin ist von Vorteil, dass die Installation schneller und einfacher vorgenommen werden kann, auch können so einzelne Bauteile nicht versehentlich verloren gehen oder vergessen werden.

Bei einer Zweiteiligkeit von Fixierelement und Installationseinsatz wird dazu ein relativ komplexerer Herstellvorgang benötigt. Von Vorteil ist hierbei, dass das Fixierelement und der Installationseinsatz aus verschiedenen Materialien gefertigt werden können, um gegebenenfalls vorhandenen technischen Notwendigkeiten Rechnung tragen zu können. Bei einer solchen Lösung ist dann noch dafür zu sorgen, dass das Fixierelement mit dem Installationseinsatz verbunden ist, damit diese beiden zusammenwirken können.

Im Rahmen der Erfindung kann es sich als geeignet herausstellen, wenn das Fixierelement an dem Installationseinsatz angeklebt und / oder angeschweißt und / oder mit dieser mechanisch verbunden ist. Durch das Ankleben und / oder Anschweißen und / oder mechanische Verbinden von Fixierelement und Installationseinsatz ist deren Zusammenwirken gewährleistet.

Insbesondere kann im Rahmen der vorliegenden Erfindung vorgesehen sein, dass das Fixierelement an einem Durchbruch am Endabschnitt des Installationseinsatzes festgelegt ist.

Hierzu ist der Installationseinsatz entsprechend derart zu gestalten und herzustellen, dass am Endabschnitt beispielsweise ein Vorsprung mit einem Durchbruch vorgesehen ist. An diesem Durchbruch am Vorsprung am Endabschnitt des Installationseinsatzes ist dann das Fixierelement festzulegen, in dem dieses beispielsweise durch den Durchbruch durchgezogen wird und mithilfe eines Befestigungselements, beispielsweise in Form einer Schlaufe oder eines Riegels dann dort festgelegt ist.

In vorteilhafter Weise sind dazu die Fixierelemente in einer Anzahl von zwei bis sechs vorgesehen, wobei vier Fixierelemente bevorzugt sind.

Als günstig kann sich herausstellen, wenn vorgesehen ist, dass der Abstand eines Fixierelements zu seinem unmittelbaren Nachbarn jeweils gleich ist, so dass sich eine symmetrische Verteilung der Fixierelemente an dem Installationseinsatz ergibt.

Wie vorstehend ausgeführt, beruhen die Vorteile der vorliegenden Erfindung insbesondere auch darauf, dass an dem dem aufgeweiteten Endabschnitt gegenüberliegenden Endabschnitt des Installationseinsatzes des Anschlusssystems wenigstens ein Anlageelement angeordnet ist.

Das Anschlusssystem der vorliegenden Erfindung kann in ganz besonderem Maße aufgewertet werden, wenn diese so ausgebildet ist, dass das Anlageelement vom Endabschnitt nach außen weg steht und in Richtung des aufgeweiteten Endabschnitts gekrümmt ist.

Auf diese Weise kann das Anlageelement bei der Installation an einem Hauptrohr, einem Schacht oder dergleichen mit einer großen Wanddicke, beispielsweise mit einer Wanddicke von ca. 60 mm, wie man es bei Steinzeug- oder Beton- oder Stahlbetonrohren antrifft, an dessen Außenoberfläche anliegen und dort eine Dichtfunktion, aber auch eine Haltefunktion bereitstellen, indem der Installationseinsatz dann im Inneren des Rohres durch die Lasche und außen am Rohr durch das Anlageelement sicher im Durchbruch gehaltert wird.

In diesem Fall, also bei Hauptrohren, Schächten oder dergleichen mit einer großen Wanddicke, beispielsweise mit einer Wanddicke von ca. 60 mm, wie man es bei Steinzeug- oder Beton- oder Stahlbetonrohren antrifft, ist dann keine Fixierung des Installationseinsatzes mit den Fixierelementen gemäß vorstehender Beschreibung erforderlich.

Nach den vorstehenden Ausführungen beruhen die Vorteile der vorliegenden Erfindung insbesondere auch darauf, dass an dem dem aufgeweiteten Endabschnitt gegenüberliegenden Ende der Anlagefläche des Installationseinsatzes des Anschlusssystems wenigstens ein Fixierelement angeordnet ist.

Auf diese Weise kann bei der Installation an einem Hauptrohr, einem Schacht oder dergleichen mit einer kleiner Wanddicke, beispielsweise mit einer Wanddicke von ca. 30 mm, wie man es zum Beispiel bei Steinzeugrohren antrifft, das Fixierelement im Zusammenwirken mit dem Festlegemittel eine sichere Positionierung des Installationseinsatzes im Durchbruch erreicht werden.

In diesem Fall, also bei Hauptrohren, Schächten oder dergleichen mit einer kleinen Wanddicke, beispielsweise mit einer Wanddicke von ca. 30 mm, wie man es zum Beispiel bei Steinzeugrohren antrifft, ist dann keine Halterung des Installationseinsatzes mit dem Anlageelement gemäß vorstehender Beschreibung möglich.

Durch die besondere Ausbildung des erfindungsgemäßen Anschlusssystems, bei dem vorgesehen ist, dass an dem dem aufgeweiteten Endabschnitt gegenüberliegenden Endabschnitt des Installationseinsatzes wenigstens ein Anlageelement und dem dem aufgeweiteten Endabschnitt gegenüberliegenden Ende der Anlagefläche des Installationseinsatzes wenigstens ein Fixierelement angeordnet ist, gelingt es in einfacher Weise, eine möglichst universelle, das heißt einen großen Rohrwanddickenbereich abdeckende Lösung in Form eines Anschlusssystems am Markt bereitzustellen.

In einer bevorzugten Weiterbildung der vorliegenden Erfindung kann vorgesehen sein, dass an der Lasche am aufgeweiteten Endabschnitt ein Dichtungselement angeordnet ist, das bevorzugt ein unter Zutritt von Wasser quellendes Dichtelement ist. Hierdurch wird gewährleistet, dass im Bereich zwischen dem Endabschnitt der Lasche und dem Hauptrohr bzw. dem inlinersanierten Hauptrohr eine hohe Dichtheit gewährleistet ist, wenn die Lasche an der Innenoberfläche des Inliners anliegt. Derart ist verhindert, dass ungewollt Wasser in den Spalt zwischen dem Inliner und dem Hauptrohr eintritt.

Insbesondere wenn das Dichtungselement ein unter Zutritt von Wasser quellendes Dichtungselement ist, führen bereits geringe Mengen Wasser bzw. Feuchtigkeit dazu, dass das Dichtelement quillt, damit sein Volumen vergrößert und damit eine erhöhte Sicherheit gegen eine eventuelle Undichtheit an dieser Stelle gewährleistet.

In einer weiteren bevorzugten Ausbildung der vorliegenden Erfindung kann vorgesehen sein, dass die abgeknickte Lasche des Installationseinsatzes abschnittsweise ein weiches Polymermaterial enthält oder aus einem solchen besteht. Es kann damit eine verbesserte Dichtheit erzielt werden, da sich eine derartige Lasche an der Innenoberfläche des Inliners anschmiegt.

In einer anderen recht praktikablen Ausbildung der vorliegenden Erfindung kann an der Oberfläche der Lasche, die zum Inliner hinweist, eine Weichkomponente aufgebracht oder aufgelegt sein, die ebenfalls eine verbesserte Dichtheit bewirkt, da eine derartige Weichkomponente so ausgebildet werden kann, dass diese an der Oberfläche der Lasche an der Innenoberfläche des Inliners haftet oder an dieser dichtend wirkt.

Durch das Vorsehen eines fixierten Zustands des Installationseinsatzes mit Hilfe des an dem Installationseinsatz angeordneten Fixierelements, das mit dem Festlegemittel zur Herstellung des fixierten Zustands interagiert, wird ein sicheres und damit dichtendes Anliegen der Lasche an der Innenoberfläche des Inliners oder des Hauptrohres bewirkt.

Dieser fixierte Zustand wird aufrechterhalten, wenn die Installation des einzudrückenden Anschlussstutzens erfolgt.

Der Anschlussstutzen weist dazu ein Eingriffsende, einen Mittelteil mit Rastvorsprüngen und ein Verbindungsende auf. Der Mittelteil ist zylindrisch oder ganz wenig konisch ausgebildet, was im Folgenden aber auch unter "zylindrisch" bzw. "zylinderförmig" subsummiert wird.

Hierdurch wird die Gefahr vermieden, dass es zu einer von außen nicht sichtbaren Verlagerung des Installationseinsatzes beim Eindrücken des Anschlussstutzens in den Installationseinsatz kommt. Hierdurch könnte es zu unerwünschten Undichtigkeiten im oder am Anschlusssystem kommen, die durch die Maßnahmen gemäß vorliegender Erfindung vollkommen vermieden werden.

Ist die Installation angeschlossen, d. h. der Verbindungszustand des Rohres oder Rohrformteils mit dem Hauptrohr ist mittels des Anschlusssystems der vorliegenden Erfindung hergestellt, kann der fixierte Zustand aufgehoben werden, indem die Fixierelemente vom Festlegemittel abgenommen werden. Das Festlegemittel kann anschließend am Hauptrohr verbleiben oder vom Hauptrohr entfernt werden und für die nächste Installation eines Anschlusssystems verwendet werden.

Mit großem Vorteil kann das Anschlusssystem derartig ausgebildet sein, dass der Anschlussstutzen und / oder der Installationseinsatz und / oder das Fixierelement und / oder das Festlegemittel ein Polymermaterial enthält oder aus einem Polymermaterial besteht, wobei das Polymermaterial bevorzugt ein Thermoplast, und besonders bevorzugt ein Polyolefin, wie beispielsweise ein Polypropylen oder ein Polyethylen oder ein Polybutylen oder ein Polyamid oder ein Copolymeres der Vorgenannten, oder ein Polyvinylchlorid ist und / oder der Installationseinsatzes ein elastomeres Polymermaterial enthält oder aus einem solchen besteht.

Anschlussstutzen, Installationseinsatz, Fixierelement und Festlegemittel aus Polymermaterial bzw. solche, die ein Polymermaterial enthalten, sind langlebig, inert, stabil, weisen ein geringes Gewicht auf, sind einfach handhabbar, leicht installierbar und können kostengünstig bereitgestellt werden.

Gleiches gilt für den Installationseinsatz, der aus einem Elastomer-Polymermaterial besteht oder ein solches enthält. Hierzu kann eine Auswahl aus Gummi, Styrol-Butadien-Kautschuk (SBR), Ethylen-Propylen-Dien-Kautschuk (EPDM), Nitril-Butadien-Kautschuk (NBR), Thermoplastisches Elastomer (TPE) oder anderen für die Herstellung erfolgen.

Die Aufgabe der vorliegenden Erfindung, ein Rohrsystem anzugeben, erfährt ihre Lösung in Anspruch 8.

Im Rahmen der vorliegenden Erfindung wurde erkannt, dass ein Rohrsystem dann besonders günstig ausgebildet ist, wenn es wenigstens ein Anschlusssystem, wie vorstehend beschrieben, aufweist. Ein solches Rohrsystem ist gegenüber dem Stand der Technik gerade im Hinblick auf die Dichtigkeit wesentlich verbessert.

Durch ein solches erfindungsgemäßes Anschlusssystem wird ein Rohrsystem in ganz besonderer Weise technisch aufgewertet. Daraus resultieren dann die vorstehend beschriebenen Vorteile.

Das erfindungsgemäße Anschlusssystem wird wie folgt montiert:
Zunächst ist im Hauptrohr nach bekanntem Verfahren eine Queröffnung herzustellen, das kann beispielsweise durch einen Bohrvorgang oder einen Fräsvorgang geschehen. Wenn die Queröffnung im Hauptrohr hergestellt ist und wenn der Rand der Queröffnung und die Hauptrohrinnenfläche, die durch den Bohr- oder Fräsprozess erzeugt wurde und die Queröffnung begrenzt, entsprechend geglättet ist, ist der Installationseinsatz in einem deformierten Zustand mit der Lasche voraus in die Queröffnung des Hauptrohres teilweise einzuführen, wobei nach dem Einführen dann die Deformation rückgängig zu machen ist. In diesem Zustand stehen die Fixierelemente nach außen.

Das Anlageelement liegt bei der Installation an einem Hauptrohr, einem Schacht oder dergleichen mit einer großen Wanddicke, beispielsweise mit einer Wanddicke von ca. 60 mm, wie man es bei Steinzeug- oder Beton- oder Stahlbetonrohren antrifft, an dessen Außenoberfläche an und übt dort eine Haltefunktion aus, indem der Installationseinsatz dann im Inneren des Rohres durch die Lasche und außen am Rohr durch das Anlageelement sicher im Durchbruch gehaltert wird.

In diesem Fall, also bei Hauptrohren, Schächten oder dergleichen mit einer großen Wanddicke, beispielsweise mit einer Wanddicke von ca. 60 mm, wie man es bei Steinzeug- oder Beton- oder Stahlbetonrohren antrifft, ist dann keine Fixierung des Installationseinsatzes mit den Fixierelementen gemäß vorstehender Beschreibung erforderlich.

Bei der Installation an einem Hauptrohr, einem Schacht oder dergleichen mit einer kleinen Wanddicke, beispielsweise mit einer Wanddicke von ca. 30 mm, wie man es bei Steinzeugrohren antrifft, ist das Fixierelement im Zusammenwirken mit dem Festlegemittel für eine sichere Positionierung des Installationseinsatzes im Durchbruch notwendig.

In diesem Fall, also bei Hauptrohren, Schächten oder dergleichen mit einer kleinen Wanddicke, beispielsweise mit einer Wanddicke von ca. 30 mm, wie man es bei Steinzeugrohren antrifft, ist dann keine Halterung des Installationseinsatzes mit dem Anlageelement gemäß vorstehender Beschreibung möglich.

Das Festlegemittel in Form eines Ringes ist auf der Außenoberfläche des Hauptrohres um die Queröffnung zu positionieren, und die Fixierelemente sind am Festlegemittel festzulegen. Hierzu können beispielsweise Haken am Festlegemittel vorgesehen sein, die mit entsprechenden Durchbrüchen am Fixierelement zusammenwirken, wozu die Durchbrüche am Fixierelement in die Haken am Festlegemittel einzuhängen sind.

Bevorzugt sind am Fixierelement in verschiedenen Abständen Durchbrüche angeordnet, sodass für entsprechend unterschiedliche Rohrwanddicken am Hauptrohr dann geeignete Durchbrüche genutzt werden können. Den Durchbrüchen können zu diesem Zweck auch Markierungen oder Informationen zugeordnet sein, um so schnell zu erfassen, welcher Durchbruch bei welcher Wanddicke des Hauptrohres zu nutzen ist.

Auf diese Weise wird der Installationseinsatz in einen fixierten Zustand versetzt.

In diesem fixierten Zustand ist der Installationseinsatz derart in der Queröffnung des Hauptrohres installiert, dass die Lasche an der Innenoberfläche des Hauptrohres oder an der Innenoberfläche des Inliners im Hauptrohr fest anliegt und die äußere Anlagefläche des Installationseinsatzes an der Hauptrohrinnenfläche der Queröffnung anliegt.

Bei Hauptrohren mit einer Wanddicke zwischen ca. 30 mm und ca. 60 mm kann das installierende Personal je nach realer Wanddicke auswählen, welche der vorstehend geschilderten Techniken zur Installation anzuwenden ist.

Der Anschlussstutzen ist dann in den Installationseinsatz einzudrücken, wozu beispielsweise Markierungen genutzt werden können, die dem installierenden Personal einen Hinweis geben, wie weit der Anschlussstutzen in den Installationseinsatz eingedrückt ist.

Durch diese Technik ist sichergestellt, dass eine sehr hohe Zuverlässigkeit hinsichtlich der Dichtheit des Anschlusssystems durch ein sicheres und dichtes Anliegen der Lasche des Installationseinsatzes an der Innenoberfläche des Inliners vorliegt.

Wenn dies geschehen ist, ist der ordnungsgemäße Sitz des Anschlusssystems erreicht, das Festlegemittel in Form des Ringes kann am Anschlusssystem verbleiben, kann aber alternativ auch abgenommen und für die nächste Installation genutzt werden.

Der Installationseinsatz, der Anschlussstutzen und das Festlegemittel der vorliegenden Erfindung können in einem Polymerformgebungsprozess, wie einem Spritzgussprozess oder einem Rotationsgießprozess oder einem Rotationssinterprozess oder einem Pressprozess oder einem Tiefziehprozess oder einem Extrusionsblasprozess oder einem additiven Fertigungsprozess, wie einem 3D-Druckprozess, oder einer Kombination der vorstehend aufgeführten Prozesse hergestellt sein.

Die vorstehend genannten Prozesse sind geeignet, die vorstehend Genannten gemäß vorliegender Erfindung in großer Stückzahl reproduzierbar, maßhaltig und kostengünstig herzustellen.

Hierdurch werden Installationseinsätze, Anschlussstutzen und Festlegemittel bereitgestellt, die äußerst widerstandsfähig und fest sind, und die Ansprüche der Kunden bzw. die Vorgaben der einschlägigen Spezifikationen für ihre Anwendung erfüllen.

Es kann sich im Rahmen der vorliegenden Erfindung weiterhin als sehr praktikabel ergeben, wenn vorgesehen ist, dass der Installationseinsatz und / oder der Anschlussstutzen und / oder das Festlegemittel in einem additiven Fertigungsprozess, wie einem 3D-Druckprozess hergestellt ist.

Ein solcher Prozess ist geeignet, einen Installationseinsatz und / oder einen Anschlussstutzen und / oder ein Festlegemittel gemäß vorliegender Erfindung in großer Stückzahl reproduzierbar, maßhaltig und kostengünstig herzustellen.

So kann insbesondere vorgesehen sein, dass der Installationseinsatz und / oder der Anschlussstutzen und / oder das Festlegemittel ganz oder teilweise unter Verwendung eines generativen Fertigungsverfahrens, beispielsweise durch ein 3-D-Druckverfahren, hergestellt ist.

Hierzu kann mit Vorteil ein datenverarbeitungsmaschinenlesbares dreidimensionales Modell für die Herstellung genutzt werden.

Die Erfindung umfasst auch ein Verfahren zur Erzeugung eines datenverarbeitungsmaschinenlesbaren dreidimensionalen Modells zur Verwendung in einem Herstellungsverfahren für einen Installationseinsatz und / oder einen Anschlussstutzen und / oder ein Festlegemittel. Hierbei umfasst das Verfahren insbesondere auch die Eingabe von Daten, die einen Installationseinsatz und / oder einen Anschlussstutzen und / oder ein Festlegemittel darstellen, in eine Datenverarbeitungsmaschine und die Nutzung der Daten, um einen Installationseinsatz und / oder einen Anschlussstutzen und / oder ein Festlegemittel als dreidimensionales Modell darzustellen, wobei das dreidimensionale Modell geeignet ist zur Nutzung bei der Herstellung eines Installationseinsatzes und / oder eines Anschlussstutzens und / oder eines Festlegemittels. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf einen Installationseinsatz und / oder einen Anschlussstutzen und / oder ein Festlegemittel abgegeben wird und die reflektierte Energie empfangen wird, und wobei ein virtuelles dreidimensionales Modell eines Installationseinsatzes und / oder eines Anschlussstutzens und / oder eines Festlegemittels unter Verwendung einer computerunterstützten Design-Software erzeugt wird.

Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), KunststoffPulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Anwendung findet die Erfindung überall dort, wo aus Rohren bzw. Rohrformteilen, Schächten und weiteren Bauelementen Rohrsysteme gebaut werden, bei denen ein Rohr an ein Hauptrohr bzw. einen Schacht anzuschließen ist.

Es ergeben sich so Anwendungen der vorliegenden Erfindung insbesondere im Bereich der drucklosen Leitungen zur Aufnahme, Leitung und Speicherung von Fluiden. Dies betrifft in erster Linie Systeme für die Abwasser- und solche für die Regenwasserbewirtschaftung. Aber auch in anderen Bereichen, wie beispielsweise der Schwimmbadtechnik, der Landwirtschaft, dem Industrieanlagenbau und weiteren Anwendungsfeldern kann die Erfindung vorteilhaft genutzt werden.

Bei der vorliegenden Erfindung wird davon ausgegangen, dass Rohre bzw. Rohrformteile und die zu verbindenden Bauelemente im Bereich der herzustellenden fluiddichten Verbindung einen Abschnitt mit kreisförmigem Querschnitt aufweisen. Wesentliche Teile der Figurenbeschreibung beziehen sich darauf.

Die Erfindung umfasst selbstverständlich auch Abschnitte mit Querschnitten bei Rohren bzw. Rohrformteilen und zu verbindenden Bauelementen, die von der Kreisform abweichen, also beispielsweise elliptisch, eiförmig, eckig, abgerundet eckig oder Mischformen der vorstehend Genannten darstellen.

Der Vorteil der vorliegenden Erfindung besteht insbesondere auch darin, dass durch die vorstehend geschilderten konstruktiven Maßnahmen eine Abdichtung gegen die Durchbruchlaibung des Durchbruchs, hier als Hauptrohrinnenfläche bezeichnet, erfolgt, so dass ein Anschlusssystem vorliegt, das gegenüber solchen des Standes der Technik verbessert ist.

Immer wenn vorstehend von Hauptrohren die Rede war, kann stets ein Hauptrohr durch einen Schacht ersetzt werden, ohne die vorliegende Erfindung zu verlassen.

Es versteht sich für den Fachmann. Dass die vorliegende Erfindung auch bei Rohren und dergleichen anwendbar ist, die nicht mittels eines Inliners saniert sind.

Auch in diesen Fällen ergeben sich Vorteil im Hinblick auf eine verbesserte Dichtheit des Anschlusssystems zum Rohr oder dergleichen.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung sind in den Fig. dargestellt und wird in der nachfolgenden Beschreibung näher erläutert.

Hierzu zeigen:
- Fig. 1: eine schematische seitliche geschnittene Ansicht des Installationseinsatzes, der in einer Queröffnung eines Hauptrohres positioniert ist;
- Fig. 2: eine schematische Aufsicht auf den Installationseinsatz;
- Fig. 3: eine schematische seitliche geschnittene Ansicht des Anschlusssystems.

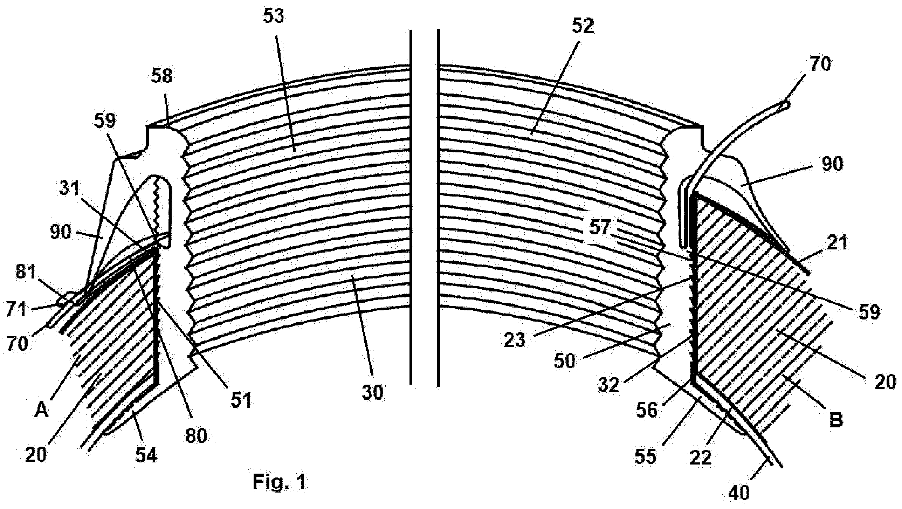

In der Fig. 1 ist eine schematische seitliche geschnittene Ansicht des Installationseinsatzes 50, der in einer Queröffnung 30 eines Hauptrohres 20 positioniert ist, gezeigt. Im Detail ist hier die Ausbildung und Anordnung des Installationseinsatzes 50 bei dem erfindungsgemäßen Anschlusssystem 100 dargestellt.

Der Installationseinsatz 50 umfasst einen aufgeweiteten Endabschnitt 54, von dem eine abknickende Lasche 55 entspringt.

Der Installationseinsatz 50 weist eine äußere Anlagefläche 57 auf, mit der er im Verbindungszustand die Hauptrohrinnenfläche 23 kontaktiert. Durch das Vorsehen von Dichtungsmitteln und / oder Rippen, kombiniert mit einer bestimmten Materialauswahl, die weich oder elastisch ausgebildet sein kann, wird die Dichtheit zwischen der äußeren Anlagefläche 57 des Installationseinsatzes 50 und der Hauptrohrinnenfläche 23 des Hauptrohres 20 hergestellt.

Der Installationseinsatz 50 ist hohlstopfenförmig und zumindest teilweise weich ausgebildet. Seine Außenseite ist an die Queröffnung 30 angepasst. An seiner Innenseite 53 weist der Installationseinsatz 50 einen Rastbereich 52 auf, der durch um den Innenumfang an der Innenseite 53 des Installationseinsatzes 50 ganz herumlaufende Vorsprünge gebildet ist, wobei die Vorsprünge in regelmäßiger Anordnung parallel oder etwa parallel zueinander ausgebildet sind.

Am Endabschnitt 58 des Installationseinsatzes 50, der dem aufgeweiteten Endabschnitt 54 gegenüberliegt, ist wenigstens ein Anlageelement 90 ausgebildet.

Das Anlageelement 90 steht vom Endabschnitt 58 des Installationseinsatzes 50 nach außen weg und ist in Richtung des aufgeweiteten Endabschnitts 54 gekrümmt.

Bei Hauptrohren 20, die einen geringen Durchmesser und eine geringe Rohrwanddicke aufweisen, kommt es dazu, dass die Hauptrohrinnenfläche 23 vergleichsweise klein ist. Dies ist in der Fig. 1 auf der linken Seite im Bereich A gezeigt, das Hauptrohr 20 ist hier ein Steinzeug- oder Beton- oder Stahlbetonrohr mit einer Wanddicke von ca. 37 mm.

An dem dem aufgeweiteten Endabschnitt 54 gegenüberliegenden Ende 59 der Anlagefläche 57 des Installationseinsatzes 50 ist wenigstens ein Fixierelement 70 angeordnet.

Das Fixierelement 70 ist einstückig in dieser Ausführungsform des Installationseinsatzes 50 mit diesem ausgebildet.

Das Fixierelement 70 ist durch die Queröffnung 30 des Hauptrohres 20 nach außen geführt und erstreckt sich ein Stück weit über dessen Außenoberfläche 21. Das Fixierelement 70 ist an einem Festlegemittel 80, an dem ein Haken 81 ausgebildet ist, festgelegt. Hierzu ist am Fixierelement 70 mindestens ein Durchbruch 71 vorgesehen, der mit dem Haken 81 des Festlegemittels 80 zusammenwirkt.

Durch das Zusammenwirken von Fixierelement 70 und Festlegemittel 80 ist der Installationseinsatz 50 in einem fixierten Zustand in der Queröffnung 30 des Hauptrohres 20 positioniert und dichtet mit der Lasche 55 zur Innenoberfläche des Inliners 40 im Hauptrohr 20 ab.

Bei Hauptrohren 20, die einen großen Durchmesser und eine große Rohrwanddicke aufweisen, kommt es dazu, dass die Hauptrohrinnenfläche 23 vergleichsweise groß ist. Dies ist in der Fig. 1 auf der rechten Seite im Bereich B gezeigt, das Hauptrohr 20 ist hier eine Steinzeug- oder Beton- oder Stahlbetonrohr mit einer Wanddicke von ca. 60 mm.

In diesem fixierten Zustand ist der Installationseinsatz 50 derart in der Queröffnung 30 des Hauptrohres 20 installiert, dass die Lasche 55 an der Innenoberfläche des Inliners 40 oder an der Innenoberfläche 22 des Hauptrohres 20 im Hauptrohr 20 fest anliegt und die äußere Anlagefläche 57 des Installationseinsatzes 50 an der Hauptrohrinnenfläche 23 der Queröffnung 30 anliegt.

In der Fig. 1 ist weiter gezeigt, dass an der Lasche 55 des Installationseinsatzes 50 ein Abschnitt ausgebildet, der beispielsweise in Form einer umlaufenden Nut geformt ist, um dort ein Dichtungselement 56 aufzunehmen. Bevorzugt ist das Dichtungselement 56 ein unter Zutritt von Wasser quellendes Dichtungselement.

Auf diese Weise kann eine verbesserte Dichtfunktion zwischen der Lasche 55 des Installationseinsatzes 50 und dem Inliner 40 auf der Innenoberfläche 22 des Hauptrohres 20 hergestellt werden. Sollte es dazu kommen, dass Feuchtigkeit in den Zwischenraum zwischen der am Inliner 40 anliegenden Lasche 55 des Installationseinsatzes 50 gelangt, so wird das unter Zutritt von Wasser quellende Dichtungselement 56 aktiviert, expandiert und dichtet zusätzlich ab.

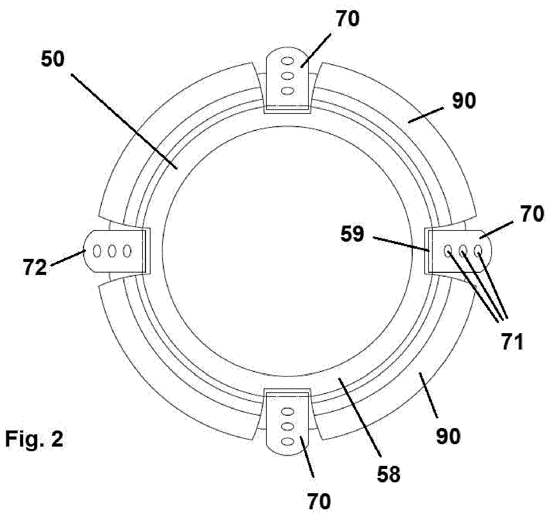

In der Fig. 2 ist eine schematische Aufsicht auf den Installationseinsatz 50 dargestellt.

Die Blickrichtung ist dabei so gewählt, dass der Endabschnitt 58 zu sehen ist.

Die Bezugszeichen in Fig. 2 entsprechen denen aus der vorausgehenden Figur.

Der Installationseinsatz 50 ist symmetrisch ausgebildet.

Am Ende 59 der hier nicht sichtbaren Anlagefläche 57 des Installationseinsatzes 50 sind mehrere Fixierelemente 70 in Form von Bändern mit einem Winkelabstand zum jeweiligen Nachbarn von etwa 90° ausgebildet.

Auf diese Weise sind vier Fixierelemente 70 in Form von Bändern am Endabschnitt 58 angeordnet.

Jedes Fixierelement 70 in Form eines Bandes weist Durchbrüche 71 auf, die mit bestimmten Abständen zueinander ausgebildet sind.

Das Ende 72 des Fixiermittels 70 erleichtert die Installation des Fixiermittels 70 bei der Herstellung des Anschlusssystems 100.

Zwischen jeweils zwei Fixierelementen 70 ist jeweils ein Anlageelement 90 in Form einer von dem Endabschnitt 58 des Installationseinsatzes 50 nach außen weg stehenden Lippe, die in Richtung des aufgeweiteten Endabschnitts 54 gekrümmt ist.

Ein solcher Installationseinsatz 50 mit Fixierelementen 70 und Anlageelementen 90 kann einstückig geformt sein und kann so in einfacher Weise beispielsweise in einem Spritzgussvorgang aus einem Polymermaterial und / oder einem Elastomermaterial, wie beispielsweise Kautschuk, hergestellt werden.

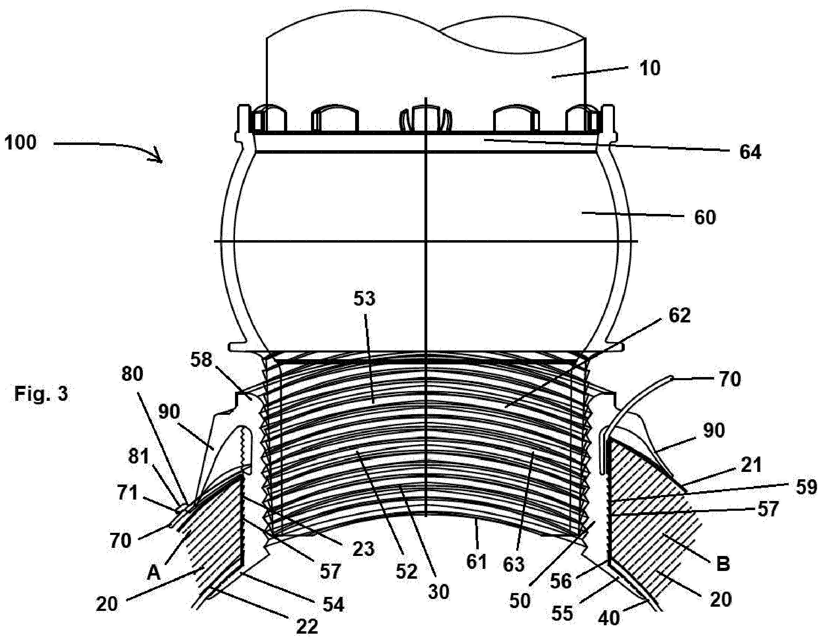

In der Fig. 3 ist in einer schematischen seitlichen teilweise geschnittenen Ansicht das Anschlusssystem 100 der vorliegenden Erfindung gezeigt.

Die Bezugszeichen in Fig. 3 entsprechen denen aus den vorausgehenden Figuren.

Das Anschlusssystem 100 ist hierbei in einem Verbindungszustand gezeigt, bei dem ein Rohr 10 mithilfe des Anschlusssystems 100 mit einem Hauptrohr 20 verbunden ist, sodass das Rohr 10 etwa senkrecht in das Hauptrohr 20 einmündet.

Das Hauptrohr 20, das beispielsweise aus Beton oder Steinzeug oder Stahlbeton hergestellt ist, weist eine Außenoberfläche 21 und eine Innenoberfläche 22 auf. Die Innenoberfläche 22 begrenzt das Lumen des Hauptrohres 20.

Im Hauptrohr 20 ist eine Queröffnung 30 eingebracht, die von einer Hauptrohrinnenfläche 23 begrenzt wird. Die Queröffnung 30 ist beispielsweise durch ein Bohrverfahren oder ein Fräsverfahren hergestellt. Die Queröffnung 30 weist bevorzugt einen kreisrunden Querschnitt auf, kann aber auch anders gestaltet sein, und beispielsweise einen elliptischen Querschnitt aufweisen.

Das Hauptrohr 20 ist mit einem Inliner 40 saniert. Dazu ist der Inliner 40, der als eine dünne Schicht ausgebildet ist, die ein Polymermaterial enthält oder aus einem Polymermaterial besteht, an der Innenoberfläche 22 des Hauptrohres 20 zumindest teilweise anliegend angeordnet.

Im Verbindungszustand weist das Anschlusssystem 100 einen Installationseinsatz 50 auf, der mit seiner äußeren Anlagefläche 57 mit der Hauptrohrinnenfläche 23 in Kontakt steht. Die äußere Anlagefläche 57 des Installationseinsatzes 50 ist dazu umlaufend oder zumindest teilweise umlaufend profiliert oder weist ein Dichtungselement auf, um eine fluiddichte Anlage des Installationseinsatzes 50 in der Queröffnung 30 an der Hauptrohrinnenfläche 23 des Hauptrohres 20 sicherzustellen.

Der Installationseinsatz 50 weist am Ende 59 der Anlagefläche 57 wenigstens ein Fixierelement 70 auf.

Das Fixierelement 70 ist derart gestaltet, dass es aus der Queröffnung 30 des Hauptrohres 20 herausragt und sich ein Stück weit entlang der Außenoberfläche 21 des Hauptrohres 20 erstreckt.

Mehrere Fixierelemente 70 in Form von Bändern sind im vorliegenden Fall am Ende 59 der Anlagefläche 57 mit einem Winkelabstand zum jeweiligen Nachbarn von etwa 90° ausgebildet, sodass vier Fixierelemente 70 in Form von Bändern angeordnet sind. Weiterhin weist der Installationseinsatz 50 an dem dem aufgeweiteten Endabschnitt 54 gegenüberliegenden Endabschnitt 58 wenigstens ein Anlageelement 90 auf.

Das Anlageelement 90 steht vom Endabschnitt 58 des Installationseinsatzes 50 nach außen weg und ist in Richtung des aufgeweiteten Endabschnitts 54 gekrümmt.

Mehrere Anlageelemente 90 in Form von Lippen sind im vorliegenden Fall am Endabschnitt 58 mit einem Winkelabstand zum jeweiligen Nachbarn von etwa 90° ausgebildet, sodass vier Anlageelemente 90 angeordnet sind.

Ein solcher Installationseinsatz 50 mit Fixierelementen 70 und Anlageelementen 90 ist einstückig geformt und kann in einfacher Weise beispielsweise in einem Spritzgussvorgang aus einem Polymermaterial und / oder einem Elastomermaterial, wie beispielsweise Kautschuk, hergestellt werden.

Bei einem Hauptrohr 20 aus Steinzeug oder Beton oder Stahlbeton mit einer Wanddicke von ca. 37 mm - wie es in der Fig. 3 im Bereich A auf der linken Seite des Anschlusssystems 100 gezeigt ist - ist zur Fixierung des Anschlusssystems 100 das Fixierelement 70 mit einem Festlegemittel 80, das einen Haken 81 aufweist, derart in Wirkverbindung gebracht, dass der Installationseinsatz 50 in der Queröffnung 30 des Hauptrohres 20 in einem fixierten Zustand gehalten wird. Eine Lasche 55 an einem weiteren Endabschnitt 54 des Installationseinsatzes 50 liegt dabei an der Innenoberfläche des Inliners 40 an.

Das Fixierelement 70 in Form eines Bandes ist derartig gebildet, dass es leicht biegbar bzw. abbiegbar oder abwinkelbar ist.

Der Installationseinsatz 50 ist durch die Fixierelemente 70 fixiert und derart gehaltert. Die Fixierelemente 70 sind an dem Festlegemittel 80, das in Form eines Kreisringes ausgebildet ist, an dort angeordneten Haken 81 gehaltert.

Hierzu ist an dem Fixierelement 70 mindestens ein Durchbruch 71 angebracht. Der Durchbruch 71 wirkt dabei zusammen mit dem Haken 81 des Festlegemittels 80 haltend. Durch die besondere Ausbildung von Festlegemittel 80 und Fixierelementen 70 zentriert sich das Festlegemittel 80 in Bezug auf die Queröffnung 30 im Hauptrohr 20, wenn der fixierte Zustand des Installationseinsatzes 50 hergestellt wird.

Um bei verschiedenen Wanddicken des Hauptrohres 20 den Installationseinsatz 50 geeignet festlegen zu können, ist es vorteilhaft, wenn am Fixierelement 70 mehrere Durchbrüche 71 ausgebildet sind, um damit den verschiedenen Wanddicken des Hauptrohres 20 Rechnung tragen zu können. Hierzu können den Durchbrüchen 71 Markierungen oder Informationen zugeordnet sein.

Um in diesem Fall eine ausreichende Dichtigkeit zwischen dem Anschlusssystem 100 und dem Hauptrohr 20 herstellen zu können, wird ein Festlegemittel 80 benutzt, das als Kreisring ausgebildet ist.

Weiterhin ist bei dem Festlegemittel 80 vorgesehen, dass die lichte Weite des als Kreisring ausgebildeten Festlegemittels 80 etwa so groß ist wie oder größer ist als die Queröffnung 30 im Hauptrohr 20.

Bei der Installation des Anschlusssystems 100 in der Queröffnung 30 des Hauptrohres 20 kann dann eine Verpressung des für die hohe Zuverlässigkeit hinsichtlich der Dichtheit vorgesehenen Installationseinsatzes 50 nicht nur zur Hauptrohrinnenfläche 23 hin erfolgen, sondern auch zur Innenoberfläche im entsprechenden Durchbruch des als Kreisring ausgebildeten Festlegemittels 80. Damit wird eine verbesserte Stabilität des Anschlusssystems 100 bei Hauptrohren 20 mit geringem Durchmesser und geringer Rohrwanddicke erreicht.

Bei einem Hauptrohr 20 aus Steinzeug oder Beton oder Stahlbeton mit einer Wanddicke von ca. 60 mm - wie es in der Fig. 3 im Bereich B auf der rechten Seite des Anschlusssystems 100 gezeigt ist - liegt zur Fixierung des Anschlusssystems 100 das Anlageelement 90 an der Außenoberfläche 21 des Hauptrohres 20 an.

In diesem fixierten Zustand ist der Installationseinsatz 50 derart in der Queröffnung 30 des Hauptrohres 20 installiert, dass die Lasche 55 an der Innenoberfläche des Inliners 40 oder an der Innenoberfläche 22 des Hauptrohres 20 im Hauptrohr 20 fest anliegt und die äußere Anlagefläche 57 des Installationseinsatzes 50 an der Hauptrohrinnenfläche 23 der Queröffnung 30 anliegt.

In den Rastbereich 52 an der Innenseite 53 des Installationseinsatzes 50 ist ein Anschlussstutzen 60 mit Rastvorsprüngen 63 eingedrückt. Die Rastvorsprünge 63 des Anschlussstutzens 60 erheben sich an dessen zylindrischen Mittelteil 62 von der Oberfläche weg den gesamten zylindrischen Mittelteil 62 komplett umlaufend in regelmäßiger Anordnung, wobei eine Mehrzahl von Rastvorsprüngen vorgesehen sind, die parallel oder etwa parallel zueinander ausgebildet sind. Die Rastvorsprünge 63 am Mittelteil 62 des Anschlussstutzens 60 sind so ausgebildet, dass sie mit dem Rastbereich 52 des Installationseinsatzes 50 unter Ausbildung einer fluiddichten Verbindung beim Hineindrücken des Anschlussstutzens 60 in den Installationseinsatz 50 interagieren können.

Zum Eindrücken des Anschlussstutzens 60 in den Rastbereich 52 des Installationseinsatzes 50 ist ein Verbindungsende 64 des Anschlussstutzens 60 nutzbar.

Der Anschlussstutzen 60 weist einen zylindrischen Mittelteil 62 auf, der beim Eindrücken des Anschlussstutzens 60 in den Installationseinsatz 50 für die Herstellung der notwendigen Dichtheit zwischen der Lasche 55 und der inneren Oberfläche des Inliners 40 bzw. der Innenoberfläche 22 des Hauptrohres 20 sorgt.

Der relativ härtere Anschlussstutzen 60 ist dabei soweit in den Installationseinsatz 50 eingedrückt, dass der Installationseinsatz 50 ordnungsgemäß verpresst ist, um eine möglichst hohe Zuverlässigkeit hinsichtlich der Dichtheit des Anschlusssystems 100 herzustellen. Hierzu ist eine Vorgabe möglich, wie beispielsweise eine solche, dass das Eindrücken bis zu einer Markierung am Anschlussstutzen 60 oder beispielsweise bis zu einem bestimmten, insbesondere bis zu einem bestimmten markierten Rastvorsprung 63 zu erfolgen hat.

Durch das Vorsehen eines zylinderförmigen Mittelteils 62 mit Rastvorsprüngen 63 bei dem Anschlussstutzen 60 ist eine besonders starke Anlage und damit sowohl eine in hohem Maße fluiddichte, wie auch feste und dauerhafte Verbindung des Anschlusssystems 100 zum Hauptrohr 20 herstellbar.

Wenn die Montage des Anschlusssystems 100 richtig erfolgt ist, ist eine möglichst hohe Dichtheit hergestellt, sodass das Fluid beispielsweise von dem Rohr 10 in das Hauptrohr 20 einströmen kann, ohne dass Fluid an unerwünschte Stellen oder eventuell sogar nach außen in die Umwelt gelangt. Ebensowenig kann in unerwünschter Weise Fluid von außen in das Hauptrohr 20 bzw. das Anschlusssystem 100 gelangen.

In den Bereich des Antriebsendes 64 des Anschlussstutzens 60 ist das Rohr 10 zumindest teilweise eingeschoben.

Der Anschlussstutzen 60 endet mit seinem Eingriffsende 61 im Bereich des Lumens oder ein Stück weit vor dem Lumen des Hauptrohres 20.

Bei ordnungsgemäßer Installation des Anschlusssystems 100 ist eine fluiddichte Verbindung zwischen dem angeschlossenen Rohr 10 und dem Hauptrohr 20 derart hergestellt, dass die äußere Anlagefläche 57 des Installationseinsatzes 50 durch die Verpressung durch das Eindrücken des Anschlussstutzens 60 in diesem Bereich die Dichtheit herstellt und die Dichtheit gegen ein Hinterlaufen bzw. Hinterwandern des Inliners 40 an der Innenoberfläche 22 des Hauptrohres 20 durch die Lasche 55 an dem Installationseinsatz 50 sichergestellt ist.

In Fig. 3 ist weiter gezeigt, dass an der Lasche 55 des Installationseinsatzes 50 ein Abschnitt ausgebildet ist, um dort ein zusätzliches Dichtungselement 56 aufzunehmen. Bevorzugt ist das Dichtungselement 56 ein unter Zutritt von Wasser quellendes Dichtungselement.

Auf diese Weise kann eine verbesserte Dichtfunktion zwischen der Lasche 55 des Installationseinsatzes 50 und dem Inliner 40 auf der Innenoberfläche des Inliners 40 hergestellt werden. Sollte es dazu kommen, dass Feuchtigkeit in den Zwischenraum zwischen der am Inliner 40 anliegenden Lasche 55 des Installationseinsatzes 50 gelangt, so wird das unter Zutritt von Wasser quellende Dichtungselement 56 aktiviert, expandiert und dichtet zusätzlich ab.

### Bezugszeichenliste

- 10: Rohr
- 20: Hauptrohr
- 21: Außenoberfläche
- 22: Innenoberfläche
- 23: Hauptrohrinnenfläche
- 30: Queröffnung
- 31: Rand
- 32: Innenfläche
- 40: Inliner
- 50: Installationseinsatz
- 51: Außenseite
- 52: Rastbereich
- 53: Innenseite
- 54: aufgeweiteter Endabschnitt
- 55: Lasche
- 56: Dichtungselement
- 57: äußere Anlagefläche
- 58: Endabschnitt
- 59: Ende
- 60: Anschlussstutzen
- 61: Eingriffsende
- 62: zylinderförmiges Mittelteil
- 63: Rastvorsprung
- 64: Verbindungsende
- 70: Fixierelement
- 71: Durchbruch
- 72: Ende
- 80: Festlegemittel
- 81: Haken
- 90: Anlageelement
- 100: Anschlusssystem
- A: Bereich
- B: Bereich

## Patentansprüche

1. Anschlusssystem (100) zum Anschließen eines Rohres (10) an ein Hauptrohr (20), einen Schacht, oder dergleichen, an einer Queröffnung (30), wobei das Anschlusssystem (100) zu diesem Zweck mit dem Hauptrohr (20) oder dem Schacht verbindbar ist, mit einem hohlstopfenförmigen, zumindest teilweise weichen Installationseinsatz (50), dessen Außenseite (51) an die Queröffnung (30) angepasst ist, und dessen Innenseite (53) einen Rastbereich (52) aufweist, wobei der Installationseinsatz (50) einen aufgeweiteten Endabschnitt (54) mit wenigstens einer abgeknickten Lasche (55) aufweist, der durch Zusammendrücken mit der Lasche (55) voran durch die Queröffnung (30) des Hauptrohres (20) oder Schachts in dieses / diesen teilweise einschiebbar ist, und wobei eine äußere Anlagefläche (57) des Installationseinsatzes (50) in einem Verbindungszustand, in dem das Anschlusssystem (100) mit dem Hauptrohr (20) oder Schacht verbunden ist, wenigstens teilweise eine Hauptrohrinnenfläche (23), die an die Queröffnung (30) angrenzt und diese umgibt, kontaktiert, und einem relativ härteren Anschlussstutzen (60), der ein Eingriffsende (61), einen zylinderförmigen Mittelteil (62) mit Rastvorsprüngen (63) und ein Verbindungsende (64) aufweist, wobei an dem dem aufgeweiteten Endabschnitt (54) gegenüberliegenden zweiten Endabschnitt (58) des Installationseinsatzes (50) wenigstens ein Anlageelement (90) und dem dem aufgeweiteten Endabschnitt (54) gegenüberliegenden Ende (59) der Anlagefläche (57) des Installationseinsatzes (50) wenigstens ein Fixierelement (70) angeordnet ist, wobei das Anlageelement (90) vom zweiten Endabschnitt (58) nach außen weg steht und ir Richtung des aufgeweiteten Endabschnitts (54) gekrümmt ist.

2. Anschlusssystem (100) nach Anspruch 1, **dadurch gekennzeichnet, dass** am zweiten Endabschnitt (58) des Installationseinsatzes (50) eine Mehrzahl von Fixierelementen (70) und eine Mehrzahl von Anlageelementen (90) angeordnet ist.

3. Anschlusssystem (100) nach Anspruch 1 oder 2, **dadurch gekennzeichnet, dass** am zweiten Endabschnitt (58) des Installationseinsatzes (50) eine gleiche Anzahl vor Fixierelementen (70) und von Anlageelementen (90) angeordnet ist, wobei die Anzahl 2, 3, 4, 5 oder 6 ist.

4. Anschlusssystem (100) nach einem der vorangehenden Ansprüche, **dadurch gekennzeichnet, dass** am zweiten Endabschnitt (58) des Installationseinsatzes (50) eine symmetrische Anordnung der Fixierelemente (70) und der Anlageelemente (90) ausgebildet ist.

5. Anschlusssystem (100) nach einem der vorangehenden Ansprüche, **dadurch gekennzeichnet, dass** der Installationseinsatz (50) an seiner Innenseite (53) einen Rastbereich (52) aufweist, der durch um den Innenumfang an der Innenseite (53) des Installationseinsatzes (50) ganz herumlaufende Vorsprünge gebildet ist, wobei die Vorsprünge in regelmäßiger Anordnung parallel oder etwa parallel zueinander ausgebildet sind.

6. Anschlusssystem (100) nach einem der vorangehenden Ansprüche, **dadurch gekennzeichnet, dass** an einem Abschnitt (59) der Lasche (55) des Installationseinsatzes (50) ein Dichtungselement (56) angeordnet ist, das bevorzugt ein unter Zutritt von Wasser quellendes Dichtungselement (56) ist.

7. Anschlusssystem (100) nach einem der vorangehenden Ansprüche, **dadurch gekennzeichnet, dass** der Anschlussstutzen (60) und / oder der Installationseinsatz (50) und / oder das Fixierelement (70) und / oder das Festlegemittel (80) ein Polymermaterial enthält oder aus einem Polymermaterial besteht, wobei das Polymermaterial bevorzugt ein Thermoplast, und besonders bevorzugt ein Polyolefin, wie beispielsweise eine Polypropylen oder ein Polyethylen oder eine Polybutylen oder ein Copolymeres der Vorgenannten, oder ein Polyvinylchlorid ist, und / oder dass der Installationseinsatz (5) ein elastomeres Polymermaterial enthält oder aus einem solchen besteht.

8. Rohrsystem mit wenigstens einem Anschlusssystem (100) nach einem der Ansprüche 1 bis 7.

## Claims

1. Connection system (100) for connecting a pipe (10) to a main pipe (20), a manhole or the like at a transverse opening (30), wherein the connection system (100) is connectable to the main pipe (20) or the manhole for this purpose, comprising an at least partially soft, hollow plug-like installation insert (50), the outer side (51) of which is adapted to the transverse opening (30) and the inner side (53) of which comprises a latching region (52), wherein the installation insert (50) comprises an widened end portion (54) having at least one bent tab (55) partially insertable, by compressing with the tab (55) forward, through the transverse opening (30) of the main pipe (20) or manhole into the latter, and wherein, in a connection state in which the connection system (100) is connected to the main pipe (20) or manhole, an outer abutment surface (57) of the installation insert (50) at least partially contacts a main pipe inner surface (23) adjacent to and surrounding the transverse opening (30), and comprising a relatively harder connection piece (60) which comprises an engagement end (61), a cylindrical central part (62) having latching projections (63) and a connection end (64), wherein at least one abutment element (90) is arranged on the second end portion (58), opposite the widened end portion (54), of the installation insert (50), and at least one fastening element (70) is arranged at the end (59), opposite the widened end portion (54), of the abutment surface (57) of the installation insert (50), wherein the abutment element (90) projects outwards from the second end portion (58) and is curved towards the widened end portion (54).

2. Connection system (100) according to claim 1, **characterised in that** a plurality of fixing elements (70) and a plurality of abutment elements (90) are arranged on the second end portion (58) of the installation insert (50).

3. Connection system (100) according to claim 1 or 2, **characterised in that** a same number of fixing elements (70) and abutment elements (90) are arranged on the second end position (58) of the installation insert (50), wherein the number is 2, 3, 4, 5 or 6.

4. Connection system (100) according to any one of the preceding claims, **characterised in that** a symmetrical arrangement of the fixing elements (70) and the abutment elements (90) is formed on the second end portion (58) of the installation insert (50).

5. Connection system (100) according to any one of the preceding claims, **characterised in that** the installation insert (50) comprises, on its inner side (53), a latching region (52) formed by projections extending around the entire inner circumference on the inner side (53) of the installation insert (50), wherein the projections are formed in a regular arrangement in parallel or approximately in parallel to one another.

6. Connection system (100) according to any one of the preceding claims, **characterised in that** a sealing element (56) is arranged on a portion (59) of the tab (55) of the installation insert (50), which portion is preferably a sealing element (56) which swells by contact with water.

7. Connection system (100) according to any one of the preceding claims, **characterised in that** the connection piece (60) and/or the installation insert (50) and/or the fixing element (70) and/or the locking means (80) contains a polymer material or consists of a polymer material, wherein the polymer material is preferably a thermoplastic, and particularly preferably a polyolefin, such as for example a polypropylene or a polyethylene or a polybutylene or a copolymer of the aforementioned materials, or a polyvinyl chloride, and/or **in that** the installation insert (5) contains or consists of an elastomeric polymer material.

8. Pipe system comprising at least one connection system (100) according to any one of claims 1 to 7.

## Revendications

1. Système de raccordement (100) destiné au raccordement d'un conduit (10) à un conduit principal (20), un regard de visite ou similaire, au niveau d'une ouverture transversale (30), le système de raccordement (100) pouvant être relié à cet effet au conduit principal (20) ou au regard de visite, comportant une pièce rapportée d'installation (50) en forme de bouchon creux, au moins partiellement molle, dont le côté extérieur (51) est adapté à l'ouverture transversale (30) et dont le côté intérieur (53) présente une zone de blocage (52), la pièce rapportée d'installation (50) présentant une partie d'extrémité élargie (54) avec au moins une languette (55) pliée, qui peut être insérée partiellement, par compression avec la languette (55) en avant, par l'ouverture transversale (30) du conduit principal (20) ou regard de visite dans celui-ci, et dans lequel, dans un état de liaison dans lequel le système de raccordement (100) est relié au conduit principal (20) ou regard de visite, une surface d'appui extérieure (57) de la pièce rapportée d'installation (50) est au moins partiellement en contact avec une surface intérieure de conduit principal (23), qui est adjacente à l'ouverture transversale (30) et entoure celle-ci, et comportant un raccord (60) comparativement plus dur, qui présente une extrémité d'engagement (61), une partie centrale (62) cylindrique avec des saillies de blocage (63) et une extrémité de liaison (64), dans lequel au moins un élément d'appui (90) est disposé sur la seconde partie d'extrémité (58), opposée à la partie d'extrémité élargie (54), de la pièce rapportée d'installation (50) et au moins un élément de fixation (70) est disposé sur l'extrémité (59), opposée à la partie d'extrémité élargie (54), de la surface d'appui (57) de la pièce rapportée d'installation (50), l'élément d'appui (90) dépassant vers l'extérieur depuis la seconde partie d'extrémité (58) et étant incurvé en direction de la partie d'extrémité élargie (54).

2. Système de raccordement (100) selon la revendication 1, **caractérisé en ce qu'**une pluralité d'éléments de fixation (70) et une pluralité d'éléments d'appui (90) sont disposées sur la seconde partie d'extrémité (58) de la pièce rapportée d'installation (50).

3. Système de raccordement (100) selon la revendication 1 ou 2, **caractérisé en ce qu'**un même nombre d'éléments de fixation (70) et d'éléments d'appui (90) est disposé sur la seconde partie d'extrémité (58) de la pièce rapportée d'installation (50), le nombre étant de 2, 3, 4, 5 ou 6.

4. Système de raccordement (100) selon l'une des revendications précédentes, **caractérisé en ce qu'**une disposition symétrique des éléments de fixation (70) et des éléments d'appui (90) est réalisée sur la seconde partie d'extrémité (58) de la pièce rapportée d'installation (50).

5. Système de raccordement (100) selon l'une des revendications précédentes, **caractérisé en ce que** la pièce rapportée d'installation (50) présente une zone de blocage (52) sur son côté intérieur (53), laquelle est formée par des saillies s'étendant tout autour de la circonférence intérieure sur le côté intérieur (53) de la pièce rapportée d'installation (50), les saillies étant réalisées dans une disposition régulière parallèlement ou approximativement parallèlement les unes aux autres.

6. Système de raccordement (100) selon l'une des revendications précédentes, **caractérisé en ce qu'**un élément d'étanchéité (56) est disposé sur une partie (59) de la languette (55) de la pièce rapportée d'installation (50), lequel est de préférence un élément d'étanchéité (56) gonflant lorsque de l'eau y pénètre.

7. Système de raccordement (100) selon l'une des revendications précédentes, **caractérisé en ce que** le raccord (60) et/ou la pièce rapportée d'installation (50) et/ou l'élément de fixation (70) et/ou le moyen de blocage (80) contient un matériau polymère ou est constitué d'un matériau polymère, le matériau polymère étant de préférence un thermoplastique, et de manière particulièrement préférée une polyoléfine, par exemple un polypropylène ou un polyéthylène ou un polybutylène ou un copolymère des matériaux susmentionnés, ou un polychlorure de vinyle, et/ou **en ce que** la pièce rapportée d'installation (5) contient un matériau polymère élastomère ou est constituée d'un tel matériau.

8. Système de conduits comprenant au moins un système de raccordement (100) selon l'une des revendications 1 à 7.
